# EUROPÄISCHE PATENTSCHRIFT

(11) **EP 2 675 327 B1**
(45) Veröffentlichungstag und Bekanntmachung des Hinweises auf die Patenterteilung: **09.11.2016**
(21) Anmeldenummer: 12701008.0
(22) Anmeldetag: 26.01.2012
(51) Int. Cl.: A47J 31/44

(54) **GETRÄNKEBEHÄLTERABSTELLEINRICHTUNG**
BEVERAGE CONTAINER STORAGE DEVICE
DISPOSITIF DE DÉPÔT DE RÉCIPIENT DE BOISSON

(30) Priorität: 14.02.2011 DE 102011004029
(43) Veröffentlichungstag der Anmeldung: 25.12.2013
(73) Patentinhaber: BSH Hausgeräte GmbH, 81739 München (DE)
(72) Erfinder: HANK, Rainer, 73614 Schorndorf (DE); BEUTLROCK, Maximilian, 83361 Kienberg (DE); STEFFL, Michael, 83250 Marquartstein (DE)
(86) Internationale Anmeldenummer: PCT/EP2012/051209
(87) Internationale Veröffentlichungsnummer: WO 2012/110287

(56) Entgegenhaltungen:
- EP-A1- 0 585 607
- EP-A1- 1 639 926
- GB-A- 2 449 307

## Beschreibung

Die vorliegende Erfindung betrifft eine Getränkebehälterabstelleinrichtung, insbesondere ein Tassenpodest für einen Getränkeautomaten, gemäß dem Oberbegriff des Anspruchs 1. Die Erfindung betrifft außerdem einen Getränkeautomaten, insbesondere eine Kaffeemaschine, mit einer derartigen Getränkebehälterabstelleinrichtung.

Bei modernen Getränkeautomaten, insbesondere auch bei Kaffeemaschinen, ist ein sogenannter Tassenpodest, auf welchem ein Getränkebehälter zum Befüllen abgestellt wird, oftmals nicht hinsichtlich seiner Höhe verstellbar, so dass insbesondere vergleichsweise hohe Latte Macchiato-Gläser nur bedingt eingesetzt werden können. Bei der Verwendung von vergleichsweise niedrigen Espresso-Tassen hingegen führt das Befüllen derselben oftmals zu einem Verspritzen der Umgebung, insbesondere sofern eine Ausgabestelle nicht in der Höhe einstellbar ist. Die zuletzt erwähnte Möglichkeit, nämlich die Ausgabestelle hinsichtlich ihrer Höhe variabel auszubilden, bedarf einem nicht unerheblichen konstruktiven Aufwand, insbesondere für die Lagerung und für die Schlauchführung.

Die Druckschrift EP-A-0 585 607 offenbart eine Getränkebehälterabstelleinrichtung, nämlich ein Tassenpodest eines Getränkeautomaten (Espressomaschine), wobei die Getränkebehälterabstelleinrichtung einen drehfesten, höhenverstellbaren Stempel 12 aufweist, auf welchem ein Getränkebehälter 27 abstellbar ist. Der Stempel 12 ist höhenverstellbar, weil die Schraubenflächen 16 mit den Gegenflächen 11 der Rippen 10 zusammenwirken, wodurch ein Schraubentrieb gebildet wird, der bei einer Drehung der Auffangschale 6 gegenüber dem Stempel 12 den Stempel 12 in Richtung der Zylinderachse gegenüber der Auffangschale 6 bewegt. Der Stempel 12 ist drehfest, weil er durch einen in radialer Richtung über die Scheibe 7 hinausragenden Ansatz 17 an einer Drehung gegenüber dem Gehäuse 18 der Espressomaschine gehindert wird, indem der Ansatz 17 in eine vertikale Führungsnut 19 des Gehäuses 18 eingreift.

Die vorliegende Erfindung beschäftigt sich mit dem Problem, für eine Getränkebehälterabstelleinrichtung eine verbesserte oder zumindest eine alternative Ausführungsform anzugeben, die sich insbesondere durch eine konstruktiv einfache Bauweise und eine hohe Benutzerfreundlichkeit auszeichnet.

Dieses Problem wird erfindungsgemäß durch die Gegenstände der unabhängigen Ansprüche 1 und 6 gelöst. Vorteilhafte Ausführungsformen sind Gegenstand der abhängigen Ansprüche 2 bis 5.

Die vorliegende Erfindung beruht auf dem allgemeinen Gedanken, eine Getränkebehälterabstelleinrichtung mit einem drehfesten und höhenverstellbaren Stempel auszustatten, auf welchem der Getränkebehälter abstellbar ist. Durch den drehfesten und zugleich höhenverstellbaren Stempel kann eine Abstellhöhe für den Getränkebehälter leicht und bedarfsgerecht eingestellt werden, wodurch sowohl unterschiedlich hohe Getränkebehälter an einem Kaffeeautomaten verwendet werden können, als auch ein Befüllen unterschiedlich hoher Getränkebehälter sauber und ohne ein Verspritzen der Umgebung erfolgen kann. Durch den drehfesten höhenverstellbaren Stempel wird zudem ein darauf abgestellter Getränkebehälter ausschließlich in der Höhe verstellt und nicht etwa verdreht, was beispielsweise bei Getränkebehältern mit Henkel unerwünscht wäre. Eine derartige Getränkebehälterabstelleinrichtung kann beispielsweise bei herkömmlichen Getränkeautomaten und insbesondere bei Kaffeemaschinen eingesetzt werden und ermöglicht dabei ein komfortables und leichtes Einstellen der Höhe des Tassenpodests, so dass eine Ausgabeeinrichtung auf stets gleicher Höhe verbleiben kann. Hierdurch können insbesondere die bisher konstruktiv aufwändige Lagerung einer höhenverstellbaren Ausgabeeinrichtung sowie die konstruktiv aufwändige Schlauchführung an derselben vermieden werden.

Bei der erfindungsgemäßen Lösung weist die Getränkebehälterabstelleinrichtung ein drehfestes Unterteil, eine drehbar dazu gelagerte Spiralkulisse sowie den mit der Spiralkulisse zusammenwirkenden Stempel auf, wobei das Unterteil einen bodenseitigen, ringsegmentartigen Schlitz aufweist, durch welchen ein mit der Spiralkulisse verbundener Hebel ragt, so dass ein Verdrehen der Spiralkulisse und damit ein Heben bzw. Senken des Stempels mittels einer horizontalen Bewegung des Hebels erfolgt. Durch den bodenseitig am Unterteil angeordneten, ringsegmentartigen Schlitz ist dieser bei der gewöhnlichen Benutzung der Getränkebehälterabstelleinrichtung nicht zu sehen, wodurch ein besonders hohes ästhetisches Erscheinungsbild erzeugt werden kann. Der Hebel ist dabei zweiteilig ausgebildet, beispielsweise mit einem mit der Spiralkulisse fest verbundenen Tragarm und einem daran ankleb- bzw. anclipsbaren Griffelement, wodurch die Montage, das heißt das Durchstecken des Tragarms durch den ringsegmentartigen Schlitz am Unterteil der Getränkebehälterabstelleinrichtung erleichtert wird. Dies ermöglicht auch ein individuelles Anpassen einer Farbe bzw. eines Designs des Griffelementes, wodurch beispielsweise unterschiedliche Ausstattungslinien leicht realisierbar sind. Durch die Spiralkulisse und den damit zusammenwirkenden Stempel kann durch eine einfache Drehbewegung des Hebels und damit durch ein einfaches Verdrehen der Spiralkulisse der Stempel in der Höhe, insbesondere vertikal, verstellt werden. Bei einer weiteren vorteilhaften Ausführungsform der erfindungsgemäßen Lösung, weist die Spiralkulisse zumindest eine zwischen zwei Endpositionen gelegene Zwischenrastposition auf, über die der Stempel auf einer Zwischenhöhe fixierbar ist. Eine derartige Zwischenrastposition kann beispielsweise durch eine treppenartige Ausbildung an der Spiralkulisse erreicht werden, welche zugleich eine haptisch wahrnehmbare Position erzeugt.

Die Anordnung der zumindest einen Zwischenrastposition sowie der Anzahl derartiger Zwischenrastpositionen ist frei wählbar, wobei selbstverständlich auch denkbar ist, dass die Spiralkulisse einen über ihren gesamten Verlauf führende treppenartige Kontur aufweist, wodurch die Höhe des Stempels und damit die Höhe des Tassenpodestes nahezu stufenlos einstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Getränkebehälterabstelleinrichtung in einer teilweise geschnittenen Darstellung (links) und einer Ansicht (rechts) bei unterschiedlich hoch eingestelltem Stempel,
- Fig. 2: eine Schnittdarstellung durch die erfindungsgemäße Getränkebehälterabstelleinrichtung,
- Fig. 3: eine Ansicht von unten,
- Fig. 4a-c: die erfindungsgemäße Getränkebehälterabstelleinrichtung in unterschiedlichen Stellungen.

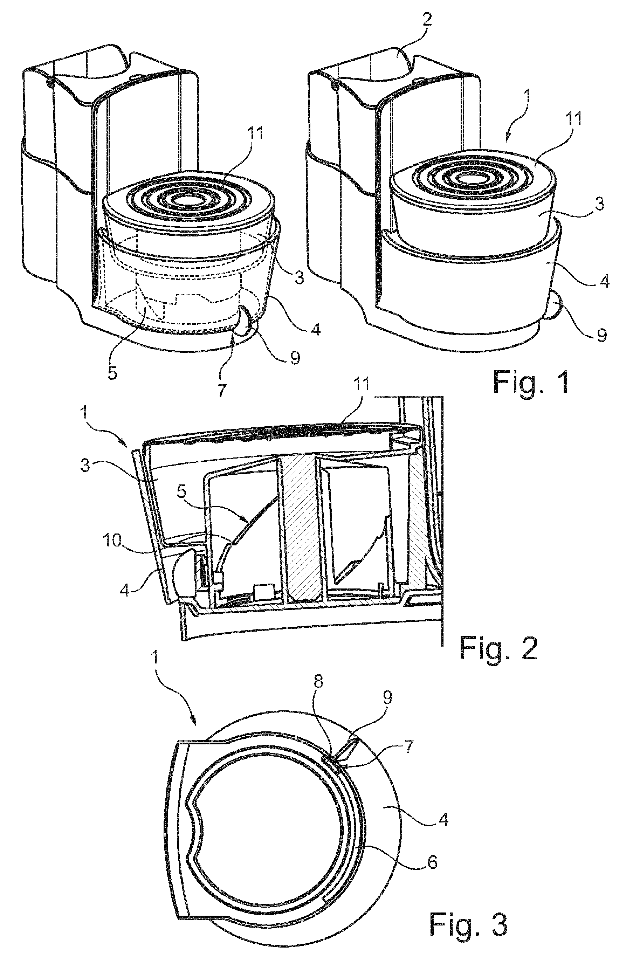

Entsprechend den Figuren 1, 2 und 4, weist eine erfindungsgemäße Getränkebehälterabstelleinrichtung 1, die beispielsweise als Tassenpodest für einen Getränkeautomaten 2, insbesondere für einen Kaffeeautomaten, ausgebildet sein kann, einen drehfesten, höhenverstellbaren Stempel 3 auf, auf welchem ein nicht gezeigter Getränkebehälter abstellbar ist. Die Getränkebehälterabstelleinrichtung 1 besitzt dabei ein drehfestes Unterteil 4, eine drehbar dazu gelagerte Spiralkulisse 5 sowie den mit der Spiralkulisse 5 zusammenwirkenden Stempel 3.

Das Unterteil 4 besitzt einen bodenseitigen, ringsegmentartigen Schlitz 6 (vgl. Figur 3), durch welchen ein mit der Spiralkulisse 5 verbundener Hebel 7 ragt, so dass ein Verdrehen der Spiralkulisse 5 und damit ein Heben/Senken des Stempels 3 mittels einem horizontalen Bewegen des Hebels 7 erfolgen kann. Der Hebel 7 ist dabei vorzugsweise zweiteilig ausgeführt und zwar mit einem einstückig mit der Spiralkulisse 5 verbundenen Tragarm 8, an welchen ein entsprechendes Griffelement 9 angeklebt bzw. angeclipst ist. Durch eine individuell frei wählbare Farbe bzw. Gestalt des Griffelementes 9 lassen sich insbesondere einzelne Ausstattungslinien leicht darstellen.

Betrachtet man insbesondere die Figur 2, so kann man erkennen, dass die Spiralkulisse 5 zumindest eine zwischen zwei Endpositionen gelegene Zwischenrastposition 10 aufweist, über die der Stempel 3 auf einer Zwischenhöhe fixierbar ist. Die Zwischenrastposition 10 ist dabei in der Art einer Stufe an der Spiralkulisse 5 ausgebildet, wobei selbstverständlich auch denkbar ist, dass die gesamte Spiralkulisse 5 treppenartig gestaltet ist, wodurch eine nahezu stufenlose Höhenverstellung des Stempels 3 ermöglicht wird. Generell ist dabei die Spiralkulisse 5 selbsthemmend ausgebildet, so dass ein Getränkebehälter unabhängig von der Ausfahrhöhe des Stempels 3 sicher darauf abstellbar ist. Die Selbsthemmung kann beispielsweise durch eine entsprechende Ausbildung der Zwischenrastposition(en) 10 dargestellt werden.

Generell sind die Spiralkulisse 5, der Stempel 3 und/oder das Unterteil 4 aus Kunststoff, insbesondere als Kunststoffspritzgussteil, ausgebildet und dadurch sowohl kostengünstig als auch qualitativ hochwertig herstellbar. Der Stempel 3 ist darüber hinaus mittels eines flüssigkeitsdurchlässigen, abnehmbaren Deckels 11, der je nach Ausführungsform beispielsweise aus Metall ausgebildet sein kann, abgedeckt (vgl. die Figuren 1, 2 und 4).

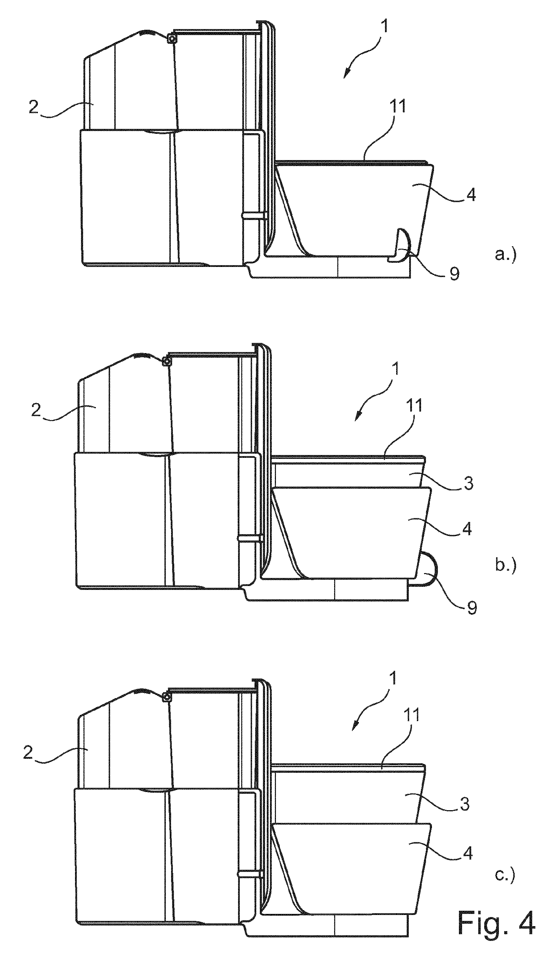

Gemäß den Figuren 4a-c ist die Getränkebehälterabstelleinrichtung 1 mit in vertikaler Höhe unterschiedlich hoch ausgefahrenem Stempel 3 gezeigt, wobei der Stempel 3 gemäß der Figur 4a in seiner untersten Position gezeichnet ist und gemäß der Figur 4c in seiner obersten Position. In der Figur 4b ist eine mögliche Zwischenposition gezeigt. Selbstverständlich können das Unterteil 4 und der dazu gehörige Stempel 3 eine konische Form aufweisen, wie dies gemäß den Figuren 1-4 dargestellt ist, rein theoretisch kann aber auch eine zylindrische Form gewählt werden.

Mit der erfindungsgemäßen Getränkebehälterabstelleinrichtung 1 ist es auf mechanisch und konstruktiv einfachste Weise möglich, die Höhe des Tassenpodestes an individuelle Getränkebehältergrößen anzupassen, so dass bei einem Einsatz in einem zugehörigen Getränkeautomaten beispielsweise auf eine Höhenverstellung einer Ausgabeeinrichtung gänzlich verzichtet werden kann. Da die höhenverstellbare Getränkebehälterabstelleinrichtung im Vergleich zu einer höhenverstellbaren Ausgabeeinrichtung deutlich kostengünstiger realisierbar ist, kann hierdurch ein nicht unerheblicher Zusatznutzen und Wettbewerbsvorteil realisiert werden.

### Bezugszeichenliste

- 1: Getränkebehälterabstelleinrichtung
- 2: Getränkeautomat
- 3: Stempel
- 4: Unterteil
- 5: Spiralkulisse
- 6: Schlitz
- 7: Hebel
- 8: Kragarm
- 9: Griffelement
- 10: Zwischenrastposition
- 11: Deckel

## Patentansprüche

1. Getränkebehälterabstelleinrichtung (1), insbesondere ein Tassenpodest für einen Getränkeautomaten (2), wobei die Getränkebehälterabstelleinrichtung (1) einen drehfesten, höhenverstellbaren Stempel (3) aufweist, auf welchem ein Getränkebehälter abstellbar ist, und die Getränkebehälterabstelleinrichtung (1) ein drehfestes Unterteil (4), eine drehbar dazu gelagerte Spiralkulisse (5) sowie den mit der Spiralkulisse (5) zusammenwirkenden Stempel (3) aufweist, **dadurch gekennzeichnet, dass** das Unterteil (4) einen bodenseitigen, ringsegmentartigen Schlitz (6) aufweist, durch welchen ein mit der Spiralkulisse (5) verbundener Hebel (7) ragt, so dass ein Verdrehen der Spiralkulisse (5) und damit ein Heben/Senken des Stempels (3) mittels einem horizontalen Bewegen des Hebels (7) erfolgt.

2. Getränkebehälterabstelleinrichtung nach Anspruch 1, **dadurch gekennzeichnet, dass** die Spiralkulisse (5) zumindest eine zwischen zwei Endpositionen gelegene Zwischenrastposition (10) aufweist, über die der Stempel (3) auf einer Zwischenhöhe fixierbar ist.

3. Getränkebehälterabstelleinrichtung nach einem der Ansprüche 1 oder 2, **dadurch gekennzeichnet, dass** der Stempel (3) einen flüssigkeitsdurchlässigen, abnehmbaren Deckel (11), insbesondere aus Metall, aufweist.

4. Getränkebehälterabstelleinrichtung nach einem der Ansprüche 1 bis 3, **dadurch gekennzeichnet, dass** die Spiralkulisse (5) selbsthemmend ausgeführt ist, so dass ein Getränkebehälter unabhängig von der Ausfahrhöhe des Stempels (3) darauf abstellbar ist.

5. Getränkebehälterabstelleinrichtung nach einem der Ansprüche 1 bis 4, **dadurch gekennzeichnet, dass** die Spiralkulisse (5), der Stempel (3) und/oder das Unterteil (4) aus Kunststoff, insbesondere als Kunststoffspritzgussteil, ausgebildet sind.

6. Getränkeautomat (2), insbesondere eine Kaffeemaschine, mit einer Getränkebehälterabstelleinrichtung (1) nach einem der Ansprüche 1 bis 5.

## Claims

1. Beverage container depositing device (1), in particular a cup stand for a beverage vending machine (2), wherein the beverage container depositing device (1) has a rotationally fixed, height-adjustable ram (3) on which a beverage container can be deposited, and the beverage container depositing device (1) has a rotationally fixed lower part (4), a spiral member (5) mounted in a rotatable manner thereto and the ram (3) interacting with the spiral member (5), **characterised in that** the lower part (4) has a slit (6) in the manner of a ring segment on the base, through which a lever (7) connected to the spiral member (5) protrudes, so that a rotation of the spiral member (5) and therefore a raising/lowering of the ram (3) takes place by means of a horizontal movement of the lever (7).

2. Beverage container depositing device according to claim 1, **characterised in that** the spiral member (5) has at least one intermediate latching position (10) located between two end positions, which can be used to fix the ram (3) at an intermediate height.

3. Beverage container depositing device according to one of claims 1 or 2, **characterised in that** the ram (3) has a liquid-permeable, removable cover (11), in particular made of metal.

4. Beverage container depositing device according to one of claims 1 to 3, **characterised in that** the spiral member (5) is embodied so as to be self-locking, so that a beverage container can be deposited thereon independently of the extended height of the ram (3).

5. Beverage container depositing device according to one of claims 1 to 4, **characterised in that** the spiral member (5), the ram (3) and/or the lower part (4) are embodied from plastic, in particular as plastic injection moulded pieces.

6. Beverage vending machine (2), in particular automatic coffee maker, with a beverage container depositing device (1) according to one of claims 1 to 5.

## Revendications

1. Dispositif de dépôt de récipient pour boisson (1), notamment un support de tasse pour un distributeur de boissons (2), le dispositif de dépôt de récipient pour boisson (1) présentant un poinçon (3) réglable en hauteur, solidaire en rotation, sur lequel un récipient pour boisson peut être posé, et le dispositif de dépôt de récipient pour boisson (1) présentant une partie inférieure (4) solidaire en rotation, une coulisse en spirale (5), logée de manière rotative par rapport à la partie inférieure, ainsi que le poinçon (3) coopérant avec la coulisse en spirale (5), **caractérisé en ce que** la partie inférieure (4) présente une fente (6) en forme de segment annulaire, côté fond, à travers laquelle dépasse un levier (7) relié à la coulisse en spirale (5) de sorte qu'une rotation de la coulisse en spirale (5) et par conséquent une levée/une baisse du poinçon (3) sont réalisées au moyen d'un mouvement horizontal du levier (7).

2. Dispositif de dépôt de récipient pour boisson selon la revendication 1, **caractérisé en ce que** la coulisse en spirale (5) présente au moins une position d'enclenchement intermédiaire (10) située entre deux positions terminales, par l'intermédiaire de laquelle position d'enclenchement intermédiaire le poinçon (3) peut être fixé à une hauteur intermédiaire.

3. Dispositif de dépôt de récipient pour boisson selon la revendication 1 ou 2, **caractérisé en ce que** le poinçon (3) présente un couvercle (11) amovible, perméable aux liquides, notamment en métal.

4. Dispositif de dépôt de récipient pour boisson selon l'une quelconque des revendications 1 à 3, **caractérisé en ce que** la coulisse en spirale (5) est réalisée de manière autobloquante, de sorte qu'un récipient pour boisson peut y être posé indépendamment de la hauteur de sortie du poinçon (3).

5. Dispositif de dépôt de récipient pour boisson selon l'une quelconque des revendications 1 à 4, **caractérisé en ce que** la coulisse en spirale (5), le poinçon (3) et/ou la partie inférieure (4) sont réalisés en matière plastique, notamment en tant que pièces moulées par injection de matière plastique.

6. Distributeur de boissons (2), notamment machine à café, comprenant un dispositif de dépôt de récipient pour boisson (1) selon l'une quelconque des revendications 1 à 5.
